## Europäisches Patentamt
## European Patent Office
## Office européen des brevets

(19)

(11) Veröffentlichungsnummer: **0 086 347 B2**

(12)
# NEUE EUROPÄISCHE PATENTSCHRIFT

(45) Veröffentlichungstag der neuen Patentschrift:
**07.08.91 Patentblatt 91/32**

(51) Int. Cl.⁵: **F24F 13/00, B60H 1/24**

(21) Anmeldenummer: **83100457.7**

(22) Anmeldetag: **20.01.83**

(54) **Klappe für Lüftungskanäle.**

(30) Priorität: **28.01.82 DE 8202047 U**

(43) Veröffentlichungstag der Anmeldung:
**24.08.83 Patentblatt 83/34**

(45) Bekanntmachung des Hinweises auf die
Patenterteilung:
**26.06.85 Patentblatt 85/26**

(45) Bekanntmachung des Hinweises auf die
Entscheidung über den Einspruch:
**07.08.91 Patentblatt 91/32**

(84) Benannte Vertragsstaaten:
**AT BE CH DE FR GB IT LI LU NL SE**

(56) Entgegenhaltungen:
DE-A- 2 036 772
DE-A- 2 734 229
DE-A- 2 830 717
DE-B- 1 927 020
DE-U- 7 320 111
US-A- 4 169 184
US-A- 4 276 954

(73) Patentinhaber: **Irbit Holding AG**
**Rue Saint Pierre 24**
**CH-1701 Fribourg (CH)**

(72) Erfinder: **Tschudin-Mahrer, Rolf**
**Römerstrasse 23**
**CH-4415 Lausen (CH)**

(74) Vertreter: **Rieder, Hans-Joachim, Dr.**
**Corneliusstrasse 45 Postfach 11 04 51**
**W-5600 Wuppertal 11 (DE)**

EP 0 086 347 B2

Jouve, 18, rue Saint-Denis, 75001 PARIS

## Beschreibung

Die Erfindung betrifft eine Klappe für Lüftungskanäle, insbesondere für Kraftfahrzeug-Klimaanlagen.

Aus der US-A-4 276 954 ist eine Klappe der in Rade stehenden Art bekannt, bei der ein inneres Traggerüst aus einem extrudierten Aluminiumprofil ein isolierendes Schaumstoffmaterial formschlüssig einfaßt. Das Aluminiumprofil bildet dabei die gegenüberliegenden Längskanten der Klappe. Durch die Fixierung des isolierenden Schaumstoffmaterials mittels eines komplizierten Aluminiumprofils ist die Herstellung der bekannten Klappe aufwendig. Außerdem ist das isolierende Material nicht längs des Klappenumfanges geschlossen, sondern durch metallische Bereiche unterbrochen, was die wärme- und schallisolierende Eigenschaft beeinträchtigt. Ferner ist die Klappe aufgrund der beschriebenen Konstruktion vergleichsweise schwer.

Weiter ist eine offenkundig vorbenutzte Klappe bekannt, die einen Klappenkörper mit einer taschenförmigen Schaumstoffummantelung aufweist, wobei zwei um eine Klappen längskannte gefaltete Schaumstofflagen mit den Breitseiten des Klappenkörpers verklebt sind. Die überstehenden Ränder der Schaumstofflagen sind gegeneinander verklebt. Die Schaumstofflage weisen eine Kleberschicht auf.

Der Erfindung liegt demgegenüber die Aufgabe zugrunde, eine Klappe für Lüftungskanäle der eingangs erwähnten Art mit ausreichender geräuschdämmemder Eigenschaft im insbesondere herstellungstechnischer Hinsicht zu verbessern.

Diese Aufgabe wird erfindungsgemäß gelöst durch Vorsehen eines mit Löchern versehenen Klappenkörpers und einer taschenförmigen Schaumstoffummamtelung für den Klappenkörper, wobei zwei um eine der Klappenlängskanten gefaltete Schaumstofflagen an ihren den durchlöcherten Klappenbreitseiten zugekehrten Flächen mit einer haftaktivierten Folie bedeckt sind, welche die über die Klappenränder vorstehenden Schaumstoffzonen und die sich im Bereich der Löcher gegenüberliegenden Schaumstoffabschnitte untereinander verbindet.

Die Klappe kann gemäß einer Weiterbildung der Erfindung eine im Bereich einer der Längskanten des Klappenkörpers und parallel zu dieser Längskante verlaufende Gelenkachse haben, wobei die der Längskante gegenüberliegende Längskante des Klappenkörpers als Klappenanlagekante ausgebildet ist. Diese Weiterbildung zeichnet sich dadurch aus, daß die Faltkante der Schaumstofflagen an der Klappenanlagekante angeordnet ist. Dadurch wird eine unterbrechungsfreie Taschenbildung am eigentlichen Klappenschließkörper erreicht.

Zufolge der erfindungsgemäßen Ausgestaltung ist eine fertigungsgünstige Lüftungskanal-Klappe mit hohem Schalldämmwert geschaffen. Sowohl der durchströmende Wind als auch Vibrationen treten nicht mehr als lästige Geräuschquelle auf. Die in einfacher Weise als Blechstanzling erstellbare Klappe wird zwischen die taschenartig gefalteten Schaumstofflagen gelegt und unter Haftaktivierung der Folie festgehalten. Dabei ist es nicht einmal erforderlich, den Stanzling zu entgraten, da der verwendete Schaumstoff eine hinreichende schützende bzw. polsternde Abdeckung der meist scharfen Randkanten ergibt.

Das Zuordnen der Klappe in die Lagermittel geschieht ohne Verletzungsgefahr. Die über die Klappenränder vorstehenden Schaumstoffzonen sind über die Folie miteinander verbunden. Bezüglich des Schaumstoffes kann sogar von offenporigem Material ausgegangen werden, da die aktivierbare Folie selbst als verschließende Haut wirkt. Sie läßt sich dem Schaumstofflagen-Zuschnitt im Durchlaufverfahren zuordnen. Die mit dem Klappen-Stanzling fest verbundene Schaumstoffummantelung ist durch ihre Fixierung im Bereich der vorstehenden Schaumstoffzonen und durch die zusätzliche Verbindung im Bereich der im Stanzling vorgesehenen Löcher verschiebefest gehalten. Dabei ist die um die eine Klappenlängskante gefaltete Schaumstoffzone besonders kantenstabil, da hier keine Unterbrechung der Schaumstoffstruktur vorliegt ; diese behält vielmehr ihre homogene Struktur bei, wenngleich sich auch das Porengefüge dort etwas verdichtet. Die Löcher verringern überdies das Eigengewicht der Klappe. Außerdem ist es nicht mehr erforderlich, der Klappe einen elastischen Dichtungskörper im Klappenrahmen zuzuordnen. Ein solcher Dichtungskörper ist vielmehr direkt an der Klappe selbst durch die Schaumstoffummantelung geschaffen.

Weitere Vorteile und Einzelheiten der Erfindung sind nachstehend anhand eines zeichnerisch veranschaulichten Ausführungsbeispiels näher erläutert. Es zeigen :

Fig. 1 die erfindungsgemäß ausgebildete Klappe im Ansicht,

Fig. 2 dem Schnitt gemäß Linie II-II im Fig. 1,

Fig. 3 dem Schnitt gemäß Linie III-III im Fig. 1, und zwar in gegenüber Fig. 1 vergrößertem Maßstab und

Fig. 4 einen perspektivischen Ausschnitt eines Eckbereichs der Schaumstofflage mit haftaktivierbarer Folie.

Der beim Ausführungsbeispiel ebenflächige, im wesentlichen lang rechteckig gestaltete Klappenkörper 1 bildet im Bereich seiner beiden oberen Ecken freigeschnittene Vorsprünge 2 aus zum Ansetzen von nicht näher dargestellten Lagermitteln. Diesen sind Zapfenvorsprünge oder Lägervertiefungen in Halterungen des Luftkanales zugeordnet. Die Klappengelenkachse ist mit x-x bezeichnet. Der Klappenkörper besteht aus einem Blechstanzling von ca. 1 mm Wandungsdicke. Der Klappenmittelbereich ist auf ganzer Länge durch insgesamt Löcher 3 durchbrochen. Letztere sind kreisrund und erstrecken sich in gleichen Abständen zueinander. Statt der drei relativ groBen Löcher kann es sich um eine noch reicher gelochte Platte handeln bzw. sogar um eine siebartige Lochplatte.

Der Klappenkörper 1 ist in einer taschenförmigen Schaumstoffummantelung U eingebettet. Letztere besteht aus zwei um die untere Klappenlängskante 1' gefaltete Schaumstofflagen I und II. Diese besitzen flächengleiche Grundrißform. Der Zuschnitt ist etwas größer als der des Klappenkörpers 1 selbst, so daß ein allseitiger Überstand y über den Rand R des Klappenkörpers 1 verbleibt, und zwar von etwa der vierfachen Klappendicke.

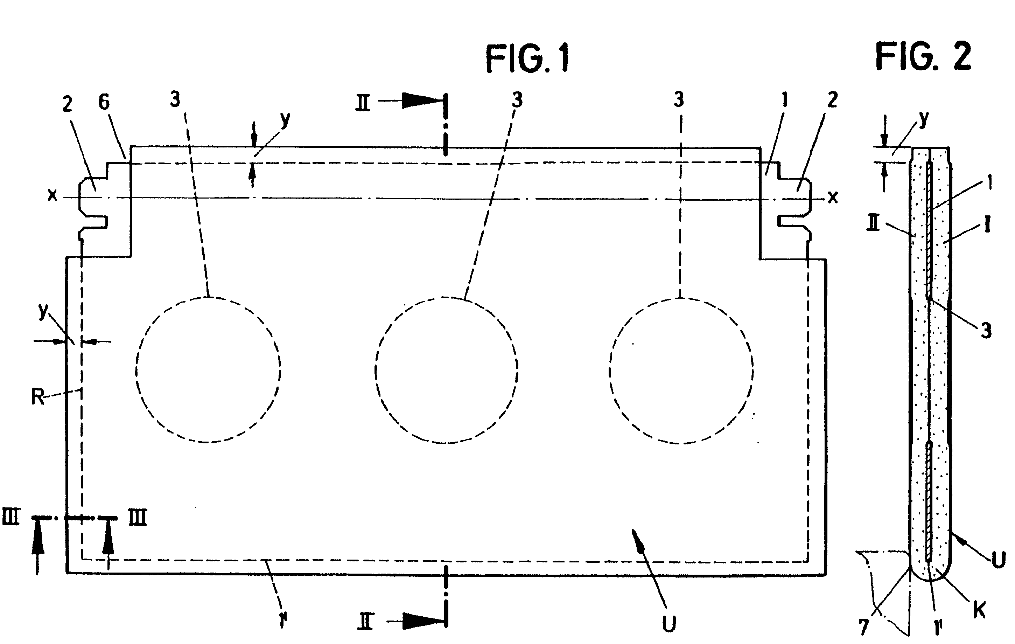

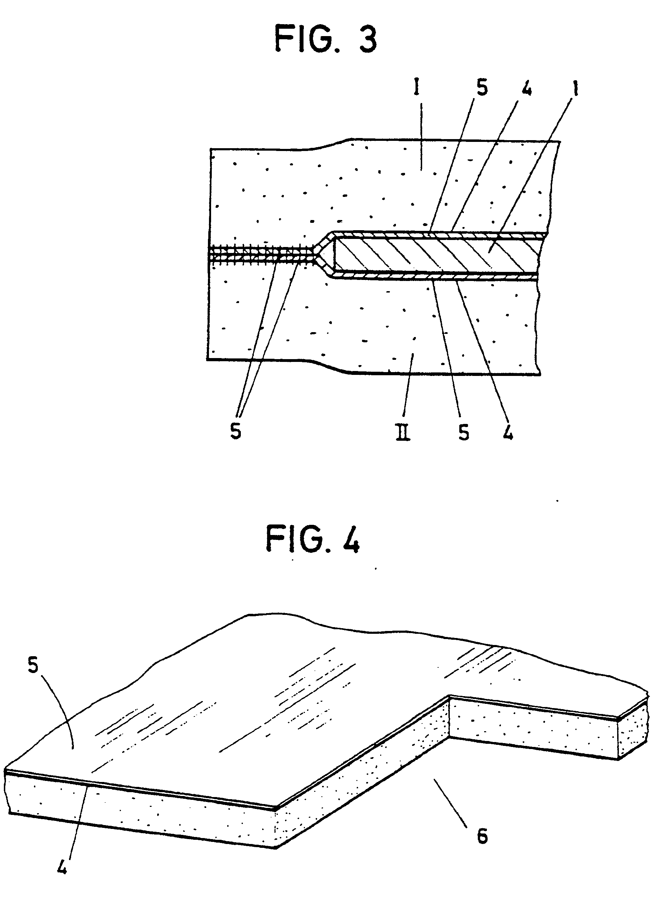

Die Schaumstofflagen I, II sind an ihren den Klappenbreitseiten zugekehrten Flächen 4 mit einer haftaktivierten Folie 5 bedeckt. Letztere ist an der Schaumstoffstruktur verankert. Es kann sich um eine thermoplastische Folie handeln, so daß sich die über die Klappenränder R vorstehenden Schaumstoffzonen und die sich im Bereich der Löcher 3 gegenüberliegenden Schaumstoffabschnitte untereinander verbinden. Die Schaumstoffummantelung U liegt hiernach fest. Selbst gewisse aus der Rückstellkraft des Materiales anzunehmende Abhebungen im Mittelbereich des Klappenkörpers 1 sind augeschlossen zufolge der durchgreifenden Verankerung im Bereich der Löcher 3. Es entsteht ein ebenflächiges Bild. Bei geringen Schaumstoffmaterialdicken tritt allenfalls eine leichte Einziehung im Bereich der Löcher 3 auf, wie dies in den Fig. 2 und 3 dargestellt ist. Bei größeren Lagendicken zeichnet sich die entsprechende Mulde nicht ab. Die optisch praktisch unbedeutende Einsenkung kann auch hingenommen werden, da die Klappenkörper der Sicht entzogen im Bereich der Luftkanäle angebracht sind.

Im lagerbildenden Eckbereich ist die taschenförmige Ummantelung U zurückgeschnitten. Die entsprechenden Nischen sind mit 6 bezeichnet. Hier können bspw. Lagerteile aufgesteckt werden, die so eine unmittelbare Anlage am dortigen, freistehenden Klappenabschnitt erhalten.

Die der Gelenkachse x-x gegenüberliegende Klappenanlagekante 7 ist quergerundet zufolge der entsprechenden Umfaltung des taschenbildenden Schaumstoffzuschnitts. Die Rundung entspricht im allgemeinen der Lagendicke, kann sich jedoch aufgrund eines gewissen Falt-Zugs leicht abflachen. Diese Zone ist nahtfrei, d. h. die Schaumstoffstruktur bleibt dort homogen.

Die Folie ist von geringer Wandungsdicke. Sie bildet praktisch nur ein Häutchen.

per (1) und einer taschenförmigen Schaumstoffummantelung (U) für den Klappenkörper (1), die zwei um eine der Klappenlängskanten (1') gefaltete Schaumstofflagen (I, II) bildet und deren über die Klappenränder (R) vorstehende Schaumstoffzonen (Überstand Y) mittels einer Klebeverbindung untereinander verbunden sind, dadurch gekennzeichnet, daß der Klappenkörper (1) mit Löchern (3) versehen ist und die Schaumstofflagen (I, II) an ihren den durchlöcherten Klappenbreitseiten zugekehrten Flächen (4) mit einer haftaktivierten Folie (5) bedeckt sind, welche die über die Klappenränder (R) vorstehenden Schaumstoffzonen (Überstand Y) und die sich im Bereich der Löcher (3) gegenüberliegenden Schaumstoffabschnitte untereinander verbindet.

2. Klappe nach Anspruch 1 mit einer im Bereich einer der Längskannten des Klappenkörpers (1) und parallel zu dieser Längskante verlaufenden Gelenkachse (x-x), wobei die der Längskannte gegenüberliegende Längskante des Klappenkörpers (1) als Klappenanlagekante (7) ausgebildet ist, dadurch gekennzeichnet, daß die Faltkante (K) der Schaumstofflagen (I, II) an der Klappenanlagekante (7) angeordnet ist.

## Claims

1. Flap for ventilation channels, in particular for air conditioning installations in motor vehicles, having a flap body (1) and a pocket-shaped foam jacket (U) for the flap body (1), the pocket-shaped foam jacket (U) forming two foam layers (I, II) folded round one of the longitudinal edges (1') and whose zones (overlap Y) of the foam projecting over the edges (R) of the flap are interconnected by means of an adhesive bond, characterised in that the flap body (1) is provided with holes (3) and the foam layers (I, II) are covered on their sides (4) facing the perforated broad sides of the flap with an adhesively activated foil (5) which bonds together the zones (overlap Y) of the foam projecting over the edges (R) of the flap and the portions of foam lying opposite one another in the regions of the holes (3).

2. A flap as in Claim 1, having an axis of hinge (x-x) running in the region of one of the longitudinal edges of the flap body (1) and parallel with this longitudinal edge, where the longitudinal edge of the flap body (1), lying opposite to that longitudinal edge, is made as a flap fitting edge (7), characterized in that the folded edge (K) of the foam layers (I, II) is arranged at the flap fitting edge (7).

## Patentansprüche

1. Klappe für Lüftungskanäle, insbesondere für Kraftfahrzeug-Klimaanlagen, mit einem Klappenkör-

## Revendications

1. Volet pour conduites à circulation d'air, notamment d'installations de climatisation d'automobiles, comportant un corps de volet (1) et une enveloppe en matière expansée (U) en forme de poche, pour le corps de volet (1), enveloppe qui forme deux couches de matière expansée (I, II) repliées autour de l'une des arêtes longitudinales et dont les zones de matière expansée (partie débordante Y) en saillie par rapport aux bords du volet (R) sont jointes entre elles par une liaison adhésive, caractérisé en ce que le volet (1) est muni de trous (3) et les couches de matière expansée (I, II) sont recouvertes sur leurs faces (4) tournées vers les grands côtés perforés du volet d'une feuille collante activée (5), qui relie entre eux les zones de matière expansée (partie débordante Y) en saillie par rapport aux bords du volet (R) et les serpents de matière expansée se trouvant l'un en face de l'autre dans la zone des trous.

2. Volet selon la revendication 1 ayant un axe d'articulation (x - x) au niveau de l'une de ses arêtes longitudinales du corps de volet (1) et parallèles à cet axe longitudinal, l'arête longitudinale du corps de volet (1) opposée à l'arête longitudinale constituant l'arête d'appui (7) du volet, caractérisé en ce que l'arête de pliage (K) des couches de matière expansée (I, II) est prévue sur l'arête d'appui (7) du volet.

FIG. 2

FIG.1

# FIG. 3

# FIG. 4